# EUROPEAN PATENT SPECIFICATION

(11) **EP 1 031 711 B1**
(45) Date of publication and mention of the grant of the patent: **13.04.2005**
(21) Application number: 00102881.0
(22) Date of filing: 11.02.2000
(51) Int. Cl.: F02B 3/06, F02B 75/02, F02D 41/04, F02D 41/08, F02D 41/34

(54) **Compression-ignition type engine**
Dieselbrennkraftmaschine
Moteur diesel

(30) Priority: 22.02.1999 JP 4291199; 07.05.1999 JP 12720799
(43) Date of publication of application: 30.08.2000
(73) Proprietor: TOYOTA JIDOSHA KABUSHIKI KAISHA, Toyota-shi, Aichi-ken 471-8571 (JP)
(72) Inventor: Hiromichi, Yanagihara, c/o Toyota Jidosha K. K., Toyota-shi, Aichi-ken, 471-8571 (JP); Ohki, Hisashi, c/o Toyota Jidosha Kabushiki Kaisha, Toyota-shi, Aichi-ken, 471-8571 (JP)
(74) Representative: Pellmann, Hans-Bernd, Dipl.-Ing.

(56) References cited:
- EP-A- 0 886 050
- EP-A- 0 887 525
- DE-A- 3 735 169

## Description

### BACKGROUND OF THE INVENTION

### 1. Field of the Invention

The present invention relates to a compression-ignition type engine.

### 2. Description of the Related Art

In a compression-ignition type engine injecting fuel into a combustion chamber, normally the fuel is injected near top dead center of the compression stroke. When the injection of fuel is started, part of the fuel immediately vaporizes and forms a pre-mixture of air and fuel. When the amount of the pre-mixture increases to a certain extent, first the pre-mixture is ignited. Next, so-called "diffusive combustion" occurs where the fuel evaporated from the fuel particles burns while diffusing.

When the pre-mixture is burned when the amount of pre-mixture increases to a certain extent, a large amount of pre-mixture is burned all at once, so the combustion pressure rises sharply and as a result combustion noise is caused and a large amount of NOx is produced. Further, the combustion is started before the injected fuel sufficiently diffuses, that is, before there is sufficient air present around the fuel particles, so soot ends up being produced. In this case, to suppress any sharp rise in the combustion pressure, it is necessary to ignite the injected fuel before the formation of the pre-mixture or when the amount of the pre-mixture is small.

Therefore, known in the art is a compression-ignition type engine designed to perform pilot injection at the end of the compression stroke and then inject the main fuel near the top dead center of the compression stroke. In a compression-ignition type engine, pilot-injected fuel is burned to form a flame and that flame is used to ignite any injected main fuel so as to thereby suppress a rapid rise in the combustion pressure.

On the other hand, the present applicant has previously proposed a compression-ignition type engine designed to inject the main fuel near the top dead center of the compression stroke (European Patent Application No. 98111161.0). In this compression-ignition type engine, unlike the case of pilot injection, the easily combustible state is maintained without burning the auxiliary fuel until the injection of the main fuel, and the main fuel and auxiliary fuel are burned after the main fuel is injected.

As mentioned above, when performing pilot injection, it is possible to suppress a rapid rise in the combustion pressure, but even with pilot injection, the combustion pressure and temperature continue to become considerably high and as a result a large amount of NOx continues being generated. Further, since the injected fuel is burned before the injected fuel is sufficiently dispersed, a large amount of soot is produced.

This pilot injection is aimed at igniting the injected fuel just when the main fuel is injected. In that case, the injection timing of the main fuel is set to the timing of combustion without poor combustion or misfires even when pilot injection is not performed. So long as the injection timing of the main fuel is set to the timing where combustion is performed without poor combustion or misfires, however, regardless of whether pilot injection is performed or not, the combustion pressure and temperature will become considerably high and further the injected fuel will be burned before the injected fuel is sufficiently dispersed. Therefore, so long as the injection timing of the main fuel is set to the timing where combustion is performed without poor combustion or misfires, a large amount of NOx and soot will be produced.

On the other hand, in the above compression-ignition type engine proposed by the present applicant, the evaporation of the fuel from the injected fuel was delayed by enlarging the particle size of the injected fuel, and the auxiliary fuel was maintained in an easily combustible state without combustion so that the combustion would be started after a time delay from the start of injection of the main fuel. Even in this compression-ignition type engine, however, when the particle size of the injected fuel is small, the main fuel injected near the top dead center of the compression stroke is burned immediately after the injection due to the auxiliary fuel in the easily combustible state and therefore a large amount of NOx and soot is produced.

That is, this compression-ignition type engine is suitable for the case of injected fuel of a large particle size, but is not suitable for the case of injected fuel of a small particle size.

### SUMMARY OF THE INVENTION

An object of the present invention is to provide a compression-ignition type engine which is capable of suppressing by a great extent the combustion noise and the production of NOx and soot even when the particle size of the injected fuel is small.

According to the present invention, there is provided a compression-ignition type engine provided with a fuel injector for injecting fuel toward a combustion chamber, auxiliary fuel being injected from the fuel injector during a compression stroke, and then main fuel being injected from the fuel injector, wherein the auxiliary fuel being is injected at a predetermined auxiliary fuel injection timing enabling the hydrocarbons contained in the auxiliary fuel to be maintained in the state oxidized up to the intermediate oxidation stage up to after the completion of injection of the main fuel, and the main fuel is injected at a predetermined main fuel injection timing delayed from an injection timing of the main fuel at which the main fuel can be burned without poor combustion or misfires when auxiliary fuel is not injected, the predetermined main fuel injection timing being one where combustion is performed with poor combustion or misfires when auxiliary fuel is not injected and without poor combustion or misfires when auxiliary fuel is injected, whereby the fuel is simultaneously ignited at numerous locations distributed over substantially the entire inside of the combustion chamber after more than a certain period passes after completion of injection of the main fuel.

### BRIEF DESCRIPTION OF THE DRAWINGS

The present invention may be more fully understood from the description of the preferred embodiments of the invention set forth below together with the accompanying drawings, in which:
Fig. 1 is an overall view of an internal combustion engine;
Fig. 2 is a sectional view of the front end of a fuel injector;
Fig. 3 is a view of typical examples of the injection timings of auxiliary fuel and main fuel;
Figs. 4(A) and 4(B) and Figs. 5(A) and 5(B) are views of the different injection timing regions;
Fig. 6 is a view of the injection timing of the main fuel;
Figs. 7(A) and 7(B) are maps of the total amount of fuel injection Q etc.;
Figs. 8(A) and 8(B) are maps of injection timings of the main fuel etc.;
Fig. 9 is a flow chart of the injection control;
Fig. 10 is a view of the operating regions I, II, and III;
Fig. 11 is a view of the operating regions I, II-1, II-2, and III; and
Figs. 12(A) and 12(B) are views of the injection timing.

### DESCRIPTION OF THE PREFERRED EMBODIMENTS

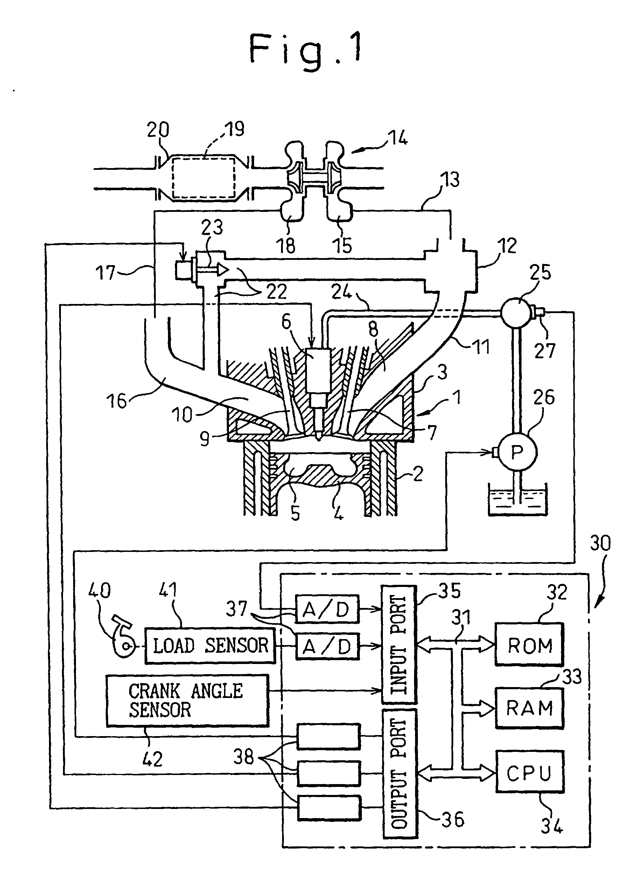

Referring to Fig. 1, 1 designates an engine body, 2 a cylinder block, 3 a cylinder head, 4 a piston, 5 a combustion chamber, 6 an electrically controlled fuel injector, 7 an intake valve, 8 an intake port, 9 an exhaust valve, and 10 an exhaust port. The intake port 8 is connected through a corresponding intake tube 11 to a surge tank 12. The surge tank 12 is connected to a compressor 15 of an exhaust turbocharger 14 through an intake duct 13. On the other hand, the exhaust port 10 is connected through an exhaust manifold 16 and exhaust pipe 17 to an exhaust turbine 18 of an exhaust turbocharger 14. The outlet of the exhaust turbine 18 is connected to a catalytic converter 20 having a built-in oxidation catalyst 19.

The exhaust manifold 16 and surge tank 12 are connected with each other through an exhaust gas recirculation (hereinafter referred to as "EGR") passage 22. In the EGR passage 22 is disposed an electrically controlled EGR control valve 23. The fuel injectors 6 are connected through fuel supply pipes 24 to a fuel reservoir, that is, a so-called common rail 25. The common rail 25 is supplied with fuel from an electrically controlled variable discharge fuel pump 26. The fuel supplied in the common rail 25 is supplied through the fuel supply pipes 24 to the fuel injectors 6. The common rail 25 is provided with a fuel pressure sensor 27 for detecting the fuel pressure in the common rail 25. The output signal of the fuel pressure sensor 27 is used to control the discharge of the fuel pump 26 so that the fuel pressure in the common rail 25 becomes the target fuel pressure.

An electronic control unit 30 is comprised of a digital computer and is provided with a read only memory (ROM) 32, random access memory (RAM) 33, microprocessor (CPU) 34, input port 35, and output port 36 connected to each other through a bidirectional bus 31. The output signal of the fuel pressure sensor 27 is input through a corresponding AD converter 37 to the input port 35. An accelerator pedal 40 has connected to it a load sensor 41 for generating an output voltage proportional to the amount of depression L of the accelerator pedal 40. The output voltage of the load sensor 41 is input through a corresponding AD converter 37 to the input port 35. Further, the input port 35 has connected to it a crank angle sensor 42 which generates an output pulse with each for example 30 degree revolution of the crankshaft. On the other hand, the output port 36 is connected through a corresponding drive circuit 38 to the fuel injectors 6, EGR control valve 23, fuel pump 26.

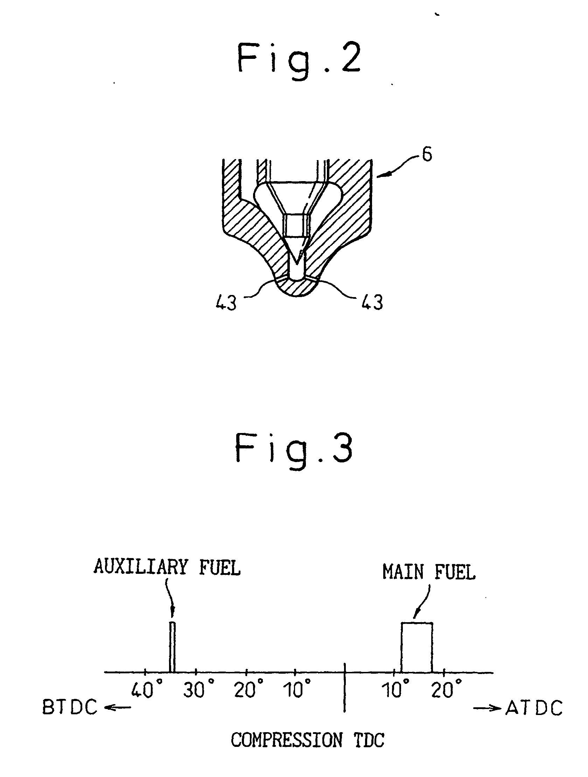

Referring to Fig. 2 showing the front end of a fuel injector 6, in the embodiment according to the present invention, the fuel injector 6 is comprised of a hole nozzle having a large number of nozzle openings 43. In the embodiment shown in Fig. 2, the fuel injector 6 has six nozzle openings 43 of the same size. The diameter of the nozzle openings 43 is formed to be from about 0.04 mm to about 0.2 mm.

Figure 3 shows typical examples of injection control in an embodiment of the present invention. As shown in Fig. 3, in the embodiment according to the present invention, the auxiliary fuel is injected during the compression stroke and the main fuel is injected after the top dead center TDC of the compression stroke.

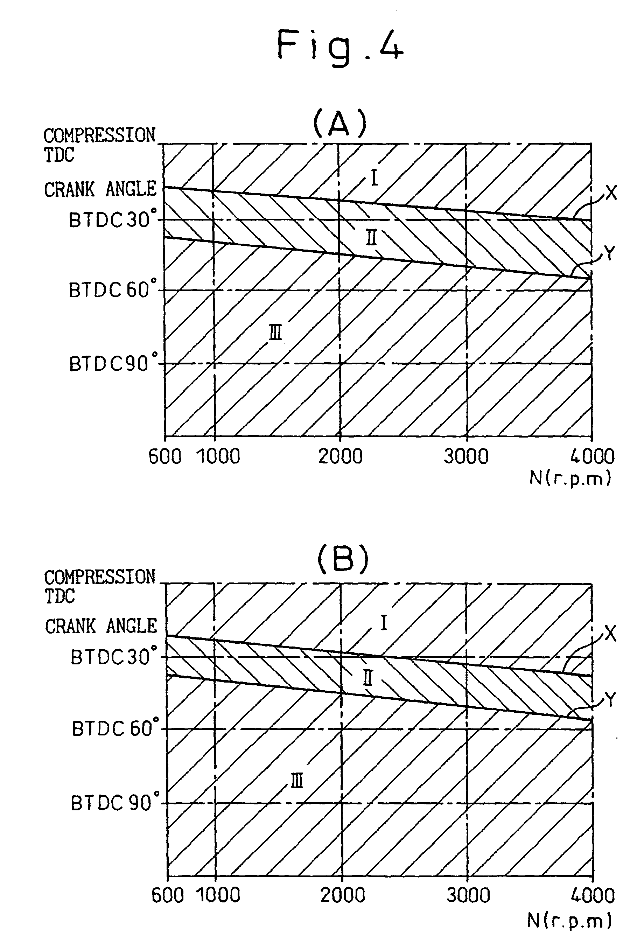

Next, a brief explanation will be given of the basic method of combustion of the present invention while referring to the drawings, then a more detailed explanation will be given of the method of combustion of the present invention with reference to Fig. 4 to Fig. 6.

When the auxiliary fuel is injected into the combustion chamber 5 from the fuel injector 6 in the second half of the compression stroke, the hydrocarbons contained in the auxiliary fuel are oxidized in the compression stroke. Next, when the compression stroke proceeds, the hydrocarbons are further oxidized and as a result the hydrocarbons are completely burned.

As opposed to this, under the method of combustion of the present invention, the auxiliary fuel is injected at a predetermined auxiliary fuel injection timing enabling the hydrocarbons contained in the auxiliary fuel to be maintained in the state oxidized up to the intermediate oxidation stage until after the start of injection of the main fuel. In this case, under the basic method of combustion according to the present invention, the auxiliary fuel is injected at the auxiliary fuel injection timing causing misfires if the main fuel were not injected.

On the other hand, under the method of combustion of the present invention, the main fuel is injected at a main fuel injection timing after the injection timing of the main fuel where the main fuel can be burned without poor combustion or misfires when auxiliary fuel is not injected, and also at a main fuel injection timing where combustion is performed with poor combustion or misfires when auxiliary fuel is not injected and without poor combustion or misfires when auxiliary fuel is injected.

When auxiliary fuel and main fuel are injected as explained above, the fuel is ignited simultaneously at numerous locations distributed substantially throughout the combustion chamber 5 after the elapse of over a certain time after the completion of injection of the main fuel and as a result smooth combustion with extremely little generation of NOx and soot is obtained.

This will be explained in detail below.

When fuel is injected near top dead center of the compression stroke in the compression-ignition type engine shown in Fig. 1, the pre-mixture formed at the time of injection of the fuel is burned rapidly and as a result a large amount of NOx and soot is produced. On the other hand, in the compression-ignition type engine shown in Fig. 1, even if injecting auxiliary fuel at the above-mentioned auxiliary fuel injection timing, if the main fuel is injected near the top dead center of the compression stroke, the main fuel is immediately burned, so the compression pressure and temperature becomes high and as a result a large amount of NOx and soot is produced.

On the other hand, if the injection timing of the fuel is made later than the top dead center of the compression stroke, the temperature in the combustion chamber 5 at the time of fuel injection becomes lower than that of the top dead center of the compression stroke, so the amount of the pre-mixture decreases. By just making the fuel injection timing somewhat later than the top dead center of the compression stroke, however, a considerable amount of pre-mixture continues to be formed, so the pre-mixture is rapidly burned and therefore a large amount of NOx and soot is produced. On the other hand, even if the auxiliary fuel is injected at this time, the main fuel is burned immediately after injection, so the compression pressure and temperature becomes higher and therefore a large amount of NOx and soot is produced.

Where combustion is performed without poor combustion or misfires when injecting fuel once in this way, that is, when injecting only main fuel, a large amount of NOx and soot is produced regardless of whether injecting auxiliary fuel.

On the other hand, when injecting fuel once in this way, that is, when injecting only main fuel, if the injection timing is further delayed, the temperature in the combustion chamber 5 at the time of the fuel injection further falls, so poor combustion will occur, where part of the injected fuel burns, but all does not burn, or misfires will occur. In this case, however, if igniting auxiliary fuel at the above auxiliary fuel injection timing, the fuel is ignited simultaneously at numerous locations distributed substantially throughout the combustion chamber 5 and the amount of generation of NOx and soot becomes extremely low. In this case, why the fuel is ignited simultaneously at numerous locations is not necessarily clear, but this is believed to be based on the following reasons.

That is, the more delayed the fuel injection timing from the top dead center of the compression stroke, the lower the temperature in the combustion chamber 5 and the lower the pressure in the combustion chamber 5 at the time of fuel injection. If the pressure in the combustion chamber 5 becomes lower, the air resistance becomes smaller, so the fuel particles disperse throughout the entire combustion chamber 5 and the evaporation of fuel from the fuel particles is promoted. Therefore, sufficient oxygen becomes present around the fuel. On the other hand, the temperature of the injected fuel gradually increases while the injected fuel is dispersing. Since the temperature inside the combustion chamber 5 is low, however, even if there is sufficient oxygen present around the fuel, combustion does not result. Therefore, if nothing is done, misfires will end up occurring.

At this time, however, if the hydrocarbons oxidized up to the intermediate oxidation stage, that is, the easily combustible hydrocarbons, are dispersed in the combustion chamber 5, when the injected fuel disperses and there is sufficient oxygen present around them, the oxidation reaction of the injected fuel is promoted by the hydrocarbons and therefore combustion simultaneously starts at numerous locations in the combustion chamber 5. If combustion simultaneously starts at numerous locations in the combustion chamber 5 in this way, the temperature in the combustion chamber 5 becomes lower overall and therefore the amount of production of the NOx becomes extremely small. Further, when sufficient oxygen becomes present around the fuel, the combustion is started, so the amount of production of soot becomes extremely small. Further, the combustion at this time is smooth, so almost no combustion noise is produced any longer.

In fact, looking at consecutive photographs of combustion in the combustion chamber 5 at this time, it is learned that the fuel does not ignite until a certain time elapses from the completion of injection of the main fuel, that is, until the fuel mist is no longer visible and the fuel is uniformly dispersed in the combustion chamber 5, and that after this, combustion is simultaneously started at numerous locations.

If injecting main fuel at the main fuel injection timing where poor combustion or misfires occur when injecting only main fuel and causing the hydrocarbons oxidized up to the intermediate oxidation stage to disperse in the combustion chamber 5 at that time, it is possible to obtain smooth combustion with extremely small generation of NOx and soot. That is, to obtain smooth combustion with little generation of NOx and soot, in addition to delaying the injection timing of the main fuel, it becomes necessary to cause the hydrocarbons oxidized up to the intermediate oxidation stage to disperse in the combustion chamber 5 before the completion of injection of the main fuel. Therefore, in the present invention, auxiliary fuel is injected at the predetermined auxiliary fuel injection timing where the hydrocarbons contained in the auxiliary fuel can be maintained in the state oxidized up to the intermediate oxidation stage up to the end of the injection of the main fuel.

Note that the state of the hydrocarbons contained in the auxiliary fuel oxidized up to the intermediate oxidation stage means the state where aldehydes, ketones, peroxides, and other intermediate products are being produced. If oxidation further proceeds from this state, that is, if it proceeds up to the final oxidation stage, the hydrocarbons are burned. Note that in this case, when part of the hydrocarbons is burned, aldehydes, ketones, peroxides, and other intermediate products are produced, but if all of the hydrocarbons are burned, aldehydes, ketones, peroxides, and other intermediate products are not produced. Therefore, when part of the auxiliary fuel is burned, these intermediate products remain until after the completion of the injection of the main fuel, so the combustion according to the present invention with little generation of the NOx and soot is performed, but when all of the auxiliary fuel is completely burned, the combustion according to the present invention is not possible.

Of course, in this case, the greater the amount of the intermediate products, the more stable and better the combustion obtained, so conversion of all of the hydrocarbons contained in the auxiliary fuel to these intermediate products is most desirable. In practice, however, it is difficult to convert all of the hydrocarbons contained in the auxiliary fuel to intermediate products. Part of the hydrocarbons end up burning. Whatever the case, it is most important to produce as much intermediate products as possible.

When all of the auxiliary fuel is completely burned, the engine is driven even without injection of main fuel. At this time, there are never any misfires regardless of the quality of the combustion. As opposed to this, when substantially all of the hydrocarbons contained in the auxiliary fuel changes to intermediate products or when a relatively small part of the hydrocarbons are burned, the main fuel has to be injected or else misfires will occur and the engine will not be driven. Therefore, for the combustion according to the present invention, it can be said to be the most desirable to inject the auxiliary fuel in a manner causing misfires when not injecting main fuel.

On the other hand, intermediate products are produced when a relatively large amount of auxiliary fuel is burned or when a large portion of the auxiliary fuel is burned. In this case as well, combustion according to the present invention is possible. In this case, even if not injecting main fuel, combustion occurs although it may be poor, and the engine is driven. Therefore, even when not injecting main fuel, it is possible to inject auxiliary fuel in a manner by which combustion occurs although it may be poor and the engine is driven.

If the auxiliary fuel is injected during the suction stroke or before it, the auxiliary fuel deposits on the surface of the wall of the cylinder bore and as a result the amount of exhaust of unburnt hydrocarbons increases or the lubrication oil becomes diluted or other problems occur. In this sense, in the present invention, auxiliary fuel is made to be injected in the second half of the compression stroke.

If injecting auxiliary fuel in the second half of the compression stroke in the compression-ignition type engine shown in Fig. 1, the auxiliary fuel sometimes burns and sometimes does not burn. Whether or not the auxiliary fuel burns is largely affected by the degree of dispersion of the fuel particles and the temperature of the fuel particles. That is, if the temperature of the fuel particles rises, the fuel starts evaporating and the evaporated fuel is oxidized. In this case, if the density of the fuel particles is high, the fuel particles become high in temperature since they receive the heat of oxidation reaction of the surrounding fuel particles. If the fuel particles become high in temperature, the hydrocarbons in the fuel particles are thermally dissociated into hydrogen atoms or carbon. When hydrogen atoms are produced, combustion is rapidly started.

At the end part of the compression stroke, the pressure in the combustion chamber 5 becomes high and the density of the suction gas in the combustion chamber 5 becomes high. If the density of the suction gas in the combustion chamber 5 becomes high, the resistance becomes larger, so the injected fuel becomes harder to disperse and therefore the density of the fuel particles becomes higher. Accordingly, if the auxiliary fuel is injected at the end part of the second half of the compression stroke, the fuel density becomes higher and further the temperature in the combustion chamber 5 is high, so the auxiliary fuel is rapidly burned.

On the other hand, when injecting auxiliary fuel in the initial part of the second half of the compression stroke or during the compression stroke before that, since the density of the suction gas in the combustion chamber 5 is low at that time, the fuel particles disperse through a wide range of the combustion chamber 5. Since there is time until the end part of the compression stroke, however, the temperature of the fuel particles rises during that period and therefore the auxiliary fuel is burned. At this time, however, since the space between fuel particles is large, the hydrocarbons in the fuel particles are not thermally dissociated.

As opposed to this, when injecting auxiliary fuel in the middle part of the second half of the compression stroke, the pressure in the combustion chamber 5 at this time does not become as high as at the end part of the second half of the compression stroke, so the fuel particles disperse by a considerable amount and therefore the density of the fuel particles does not become that high. Accordingly, at this time, the fuel particles will not be thermally dissociated by the heat of the oxidation reaction of the surrounding fuel particles. On the other hand, at this time, since the time until the end part of the compression stroke is short, the temperature of the fuel particles does not rise that much. Accordingly, in the compression-ignition engine shown in Fig. 1, when the auxiliary fuel is injected in the middle part of the second half of the compression stroke, combustion does not occur. The hydrocarbons contained in the auxiliary fuel at that time therefore are held in the state oxidized up to the intermediate oxidation stage until after completion of the main injection.

Note that it is difficult to believe that none of the fuel will burn even if injecting auxiliary fuel in the middle part of the second half of the compression stroke. Some of the auxiliary fuel is probably burned. When injecting auxiliary fuel in the middle part of the second half of the compression stroke, however, misfires will occur if main fuel is not injected. Further, when injecting auxiliary fuel in the middle part of the second half of the compression stroke, if the amount of injection of the auxiliary fuel is increased, the density of the fuel particles increases and combustion becomes easier, while if the amount of injection of the auxiliary fuel is decreased, the density of the fuel particles decreases and combustion becomes difficult. Therefore, the injection timing of the auxiliary fuel, which causes misfires if main fuel is not injected, will change in accordance with the amount of injection of the auxiliary fuel.

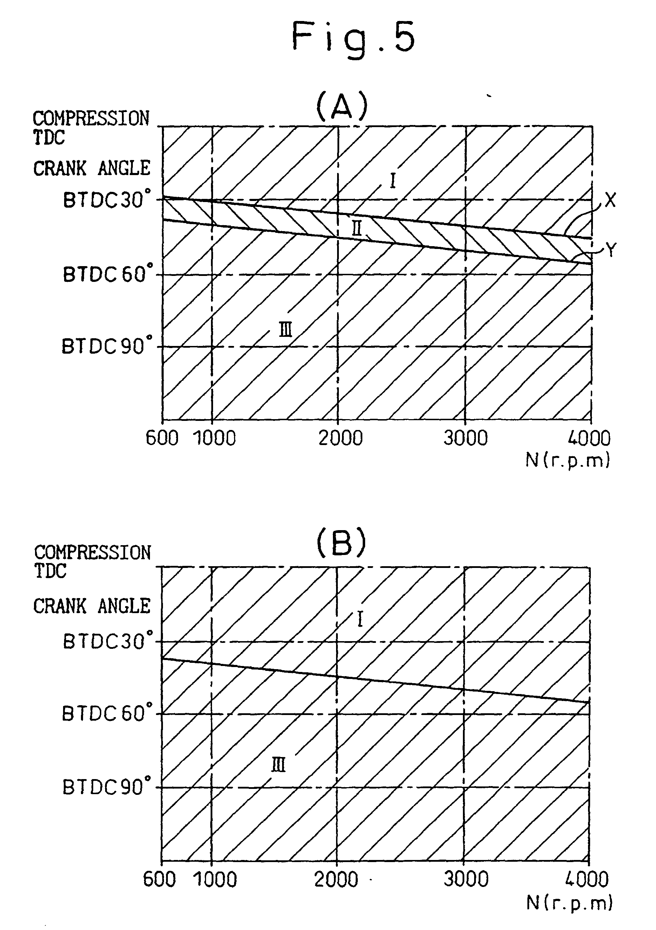

Next, an explanation will be given of the injection timing of the auxiliary fuel causing misfires when not injecting main fuel in the compression-ignition type engine shown in Fig. 1 with reference to Figs. 4(A) and 4(B) and Figs. 5(A) and 5(B).

In Figs. 4(A) and 4(B) and Figs. 5(A) and 5(B), the ordinate indicates the crank angle, while the abscissa indicates the engine speed N. Further, Fig. 4(A) shows the case of injection of fuel in an amount of 5 percent of the maximum amount of injection, Fig. 4(B) shows the case of injection of fuel in an amount of 10 percent of the maximum amount of injection, Fig. 5(A) shows the case of injection of fuel in an amount of 20 percent of the maximum amount of injection, and Fig. 5(B) shows the case of injection of fuel in an amount of over 30 percent of the maximum amount of injection.

Further, in Figs. 4(A) and 4(B) and Figs. 5(A) and 5(B), I indicates an injection timing region where auxiliary fuel is burned when injected at the injection timing for this region, II shows an injection timing region where a misfire occurs when no main fuel is injected when auxiliary fuel is injected at the injection timing for this region, and III shows an injection timing region where auxiliary fuel is burned when injected at the injection timing for this region.

In Figs. 4(A) and 4(B) and Figs. 5(A) and 5(B), X shows the limit value of the delayed side of the injection timing region II of the auxiliary fuel, while Y shows the advanced side of the injection timing region II of the auxiliary fuel. As will be understood from Figs. 4(A) and 4(B) and Fig. 5(A), the injection timing region II of the auxiliary fuel is between substantially 50° before top dead center of the compression stroke to 20° before top dead center of the compression stroke. The injection timing region II of the auxiliary fuel becomes more toward the bottom dead center of the compression stroke the higher the engine speed N.

Specifically, as shown in Figs. 4(A) and 4(B) and Fig. 5(A), regardless of the amount of injection of the auxiliary fuel, the injection timing of the auxiliary fuel at the limit value Y of the advanced side is substantially 40° before top dead center of the compression stroke when the engine speed is 1000 rpm, while is about 45° before top dead center of the compression stroke when the engine speed is 2000 rpm and is about 50° before top dead center of the compression stroke when the engine speed is 3000 rpm.

On the other hand, as shown in Fig. 4(A), the injection timing of the auxiliary fuel at the limit value X of the delayed side when the amount of injection of the auxiliary fuel is 5 percent of the maximum amount of injection is about 15° before top dead center of the compression stroke when the engine speed is 1000 rpm, is about 20° before top dead center of the compression stroke when the engine speed is 2000 rpm, and is about 25° before top dead center of the compression stroke when the engine speed is 3000 rpm.

Further, as shown in Fig. 4(B), the injection timing of the auxiliary fuel at the limit value X of the delayed side when the amount of injection of the auxiliary fuel is 10 percent of the maximum amount of injection is about 20° before top dead center of the compression stroke when the engine speed is 1000 rpm, is about 25° before top dead center of the compression stroke when the engine speed is 2000 rpm, and is about 30° before top dead center of the compression stroke when the engine speed is 3000 rpm.

Further, as shown in Fig. 5(A), the injection timing of the auxiliary fuel at the limit value X of the delayed side when the amount of injection of the auxiliary fuel is 20 percent of the maximum amount of injection is about 30° before top dead center of the compression stroke when the engine speed is 1000 rpm, is about 35° before top dead center of the compression stroke when the engine speed is 2000 rpm, and is about 40° before top dead center of the compression stroke when the engine speed is 3000 rpm.

On the other hand, as shown in Fig. 5(B), when the amount of injection of the auxiliary fuel becomes more than 30 percent of the maximum amount of injection, the injection timing region II disappears. That is, the difference between the injection timing at the limit value Y of the advanced side and the injection timing at the limit value X at the delayed side at the same engine speed N becomes smaller the larger the ratio of the amount of injection of the auxiliary fuel to the maximum amount of injection. In this case, the injection timing region II of the auxiliary fuel becomes more toward the bottom dead center side of the compression stroke the larger than amount of injection of the auxiliary fuel with respect to the maximum amount of injection. When the amount of injection of the auxiliary fuel becomes more than 30 percent of the maximum amount of injection, the injection timing region II disappears. Therefore, in this embodiment according to the present invention, the amount of injection of the auxiliary fuel is made less than 30 percent of the maximum amount of injection.

In this embodiment according to the present invention, the amount of injection of the auxiliary fuel is for example made 10 percent of the maximum amount of injection and, at this time, the injection timing of the auxiliary fuel is made a predetermined injection timing in the injection timing region II shown in Fig. 4(B). The hydrocarbons contained in the auxiliary fuel at this time are held in the state oxidized up to the intermediate oxidation stage until after the completion of the injection of the main fuel. In this case, when main fuel is not injected, misfires occur.

On the other hand, as explained above, intermediate products are produced even when a relatively large amount of auxiliary fuel is burned or a large portion of the auxiliary fuel is burned, therefore, in this case as well, it is possible to obtain smooth combustion with little generation of NOx and soot according to the present invention. The injection timing of the auxiliary fuel in this case is made slightly delayed from the limit value X of the delayed side of the injection timing region II.

As explained above, the injection timing region II shown in Figs. 4(A) and 4(B) and Fig. 5(A) is one in the compression-ignition type engine shown in Fig. 1. That is, in the compression-ignition type engine shown in Fig. 1, a fuel injector 6 having nozzle openings 43 of a diameter from about 0.04 mm to 0.2 mm is used. Therefore, the injection timing region II shown in Figs. 4(A) and 4(B) and Fig. 5(A) is one where the diameter of the nozzle openings 43 is from about 0.04 mm to about 0.2 mm. If the diameter of the nozzle openings 43 is made larger, the particle size of the injected fuel becomes larger and therefore more time is required for the injected fuel to rise in temperature. Therefore, when the diameter of the nozzle openings 43 is made larger, even if the injection timing of the auxiliary fuel is made earlier, the auxiliary fuel will not burn. Therefore, as the diameter of the nozzle openings 43 is made larger, the injection timing II moves more toward the bottom dead center.

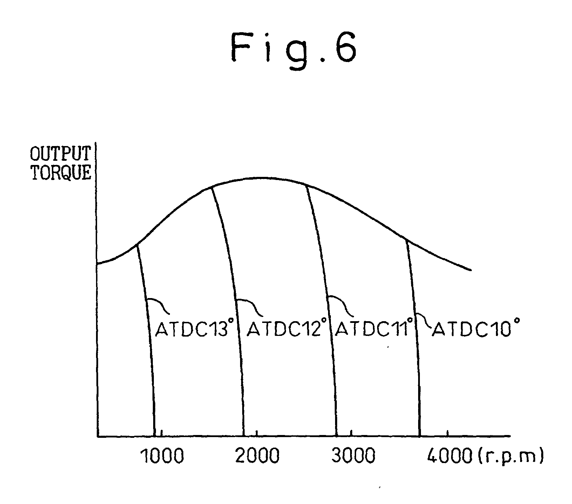

On the other hand, as explained above, the main fuel is injected at the main fuel injection timing where combustion is performed with poor combustion or misfires when auxiliary fuel is not injected and without poor combustion or misfires when auxiliary fuel is injected. Figure 6 shows typical examples of the injection timings of the main fuel in the compression-ignition type engine shown in Fig. 1. Note that in Fig. 6, the ordinate indicates the output torque, while the abscissa indicates the engine speed (rpm). The solid lines shown equivalent injection timings. Figure 6 shows four typical injection timings, that is, 10° after top dead center of the compression stroke, 11° after top dead center of the compression stroke, 12° after top dead center of the compression stroke, and 13° after top dead center of the compression stroke. As will be understood from Fig. 6, the injection timing of the main fuel is made earlier the higher the engine speed N.

As explained above, the injection timing of the main fuel shown in Fig. 6 is a typical example. The injection timing differs along with different engines, but when the diameter of the nozzle openings 43 of the fuel injector 6 is from about 0.04 mm to about 0.2 mm, the average particle size of the injected fuel becomes less than about 50 µm. At this time, the injection timing of the main fuel is made after 8° after top dead center of the compression stroke. Note that in this case, the injection timing of the main fuel is sometimes delayed to about 30° after top dead center of the compression stroke.

When the particle size of the injected main fuel becomes larger, it takes more time for the temperature of the fuel particles to rise and therefore it takes more time for the fuel to evaporate. Therefore, to cause combustion at a suitable timing, it is necessary to advance the injection timing of the main fuel the larger the particle size of the main fuel. When using a hole nozzle as the fuel injector 6, the particle size of the injected fuel becomes larger the larger the diameter of the nozzle openings 43. Therefore, in this case, it is necessary to advance the injection timing of the main fuel the larger the diameter of the nozzle openings 43.

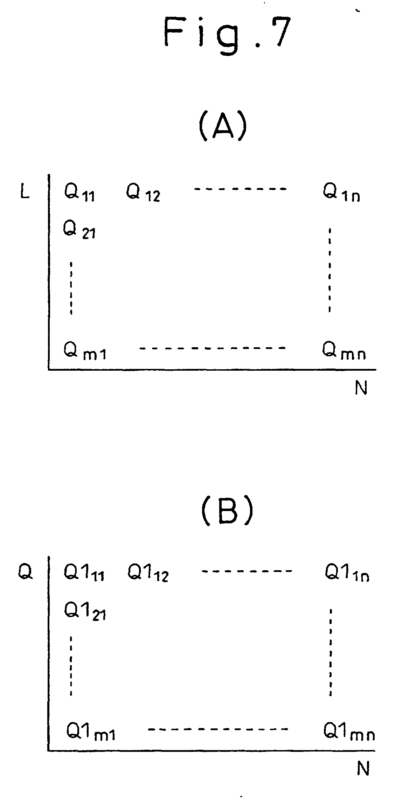

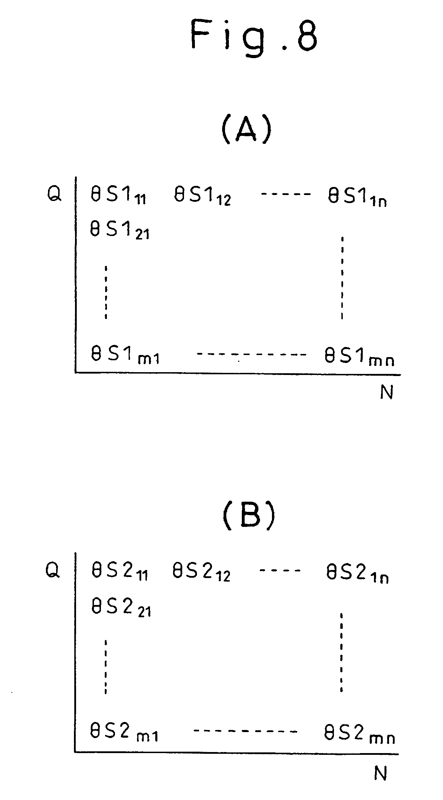

In the compression-ignition type engine shown in Fig. 1, the total amount of fuel injection Q is a function of the amount of depression L of the accelerator pedal 40 and the engine speed N. This total amount of fuel injection Q is stored in advance in the ROM 32 in the form of the map shown in Fig. 7(A). On the other hand, the amount of injection Q1 of the auxiliary fuel is a function of the total amount of fuel injection Q and the engine speed N. The amount of injection Q1 is also stored in advance in the ROM 32 in the form of the map shown in Fig. 7(B). Further, the injection start timing θS1 of the auxiliary fuel is a function of the total amount of fuel injection Q and the engine speed N. The injection start timing θS1 is also stored in advance in the ROM 32 in the form of the map shown in Fig. 8(A). Further, the injection start timing θS2 of the main fuel is also a function of the total amount of fuel injection Q and the engine speed N. The injection start timing θS2 is also stored in advance in the ROM 32 in the form of the map shown in Fig. 8(B).

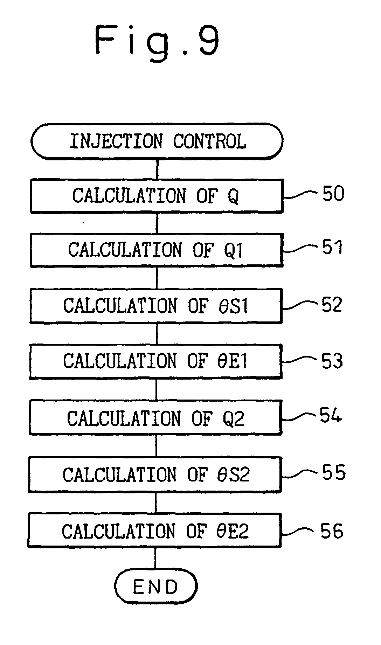

Figure 9 shows the injection control routine. Referring to Fig. 9, first, at step 50, the total amount of fuel injection Q is calculated from the map shown in Fig. 7(A), then at step 51, the amount of injection Q1 of the auxiliary fuel is calculated from the map shown in Fig. 7(B). Next, at step 52, the ignition start timing θS1 of the auxiliary fuel is calculated from the map shown in Fig. 8(A). Next, at step 53, the injection completion timing θE1 of the auxiliary fuel is calculated based on the amount of injection Q1 and the injection start timing θS1 etc. Next, at step 54, the amount of injection Q1 of the auxiliary fuel is subtracted from the total amount of injection Q to calculate the amount of injection Q2 of the main fuel. Next, at step 55, the injection start timing θS2 of the main fuel is calculated from the map shown in Fig. 8(B). Next, at step 56, the injection completion timing θE2 is calculated based on the amount of injection Q2 and the injection start timing θS2 etc.

Next, an explanation will be made of the operating regions of the engine suitable for the new combustion by the present invention explained up to here. Note that in explaining the operating regions of the engine, to facilitate understanding, the new method of combustion by the present invention explained up to here will be called "multipoint ignition combustion by double injection" and the combustion performed in the past will be called "ordinary combustion". Here, the "ordinary combustion" indicates the combustion when injecting fuel only once near the top dead center of the compression stroke and combustion when injecting main fuel near the top dead center of the compression stroke and making a pilot injection before this injection of the main fuel. When this ordinary combustion is performed, fuel is injected between the auxiliary fuel injection timing and the main fuel injection timing when the multipoint ignition combustion by double injection according to the present invention is performed.

The multipoint ignition combustion by double injection according to the present invention features a low combustion temperature, therefore the temperature of the exhaust gas becomes lower than the case of ordinary combustion. Further, in the multipoint ignition combustion by double injection according to the present invention, the combustion is started after the injected fuel is dispersed in the entire combustion chamber 5. If the injected fuel is dispersed through the entire combustion chamber 5 in this way, however, part of the injected fuel reaching the periphery of the combustion chamber 5 is not sufficiently burned and therefore a large amount of unburnt hydrocarbons is produced.

Therefore, in this embodiment of the present invention, to oxidize the unburnt hydrocarbons, an oxidation catalyst 19 is provided in the engine exhaust passage as shown in Fig. 1. When performing the multipoint ignition combustion by double injection according to the present invention, however, the temperature of the exhaust gas becomes low as explained above. In particular, at the time of engine low load operation including idling operation, the temperature of the exhaust gas becomes particularly low. If the temperature of the exhaust gas becomes lower, the temperature of the oxidation catalyst 19 falls and the activity of the oxidation catalyst 19 drops so there is the danger that the unburnt hydrocarbons cannot be sufficiently removed.

On the other hand, when the engine load is close to full load, the amount of fuel injection becomes greater, so the injection time becomes longer. If the engine speed becomes higher at this time, it becomes difficult to inject all of the main fuel within the optimal period.

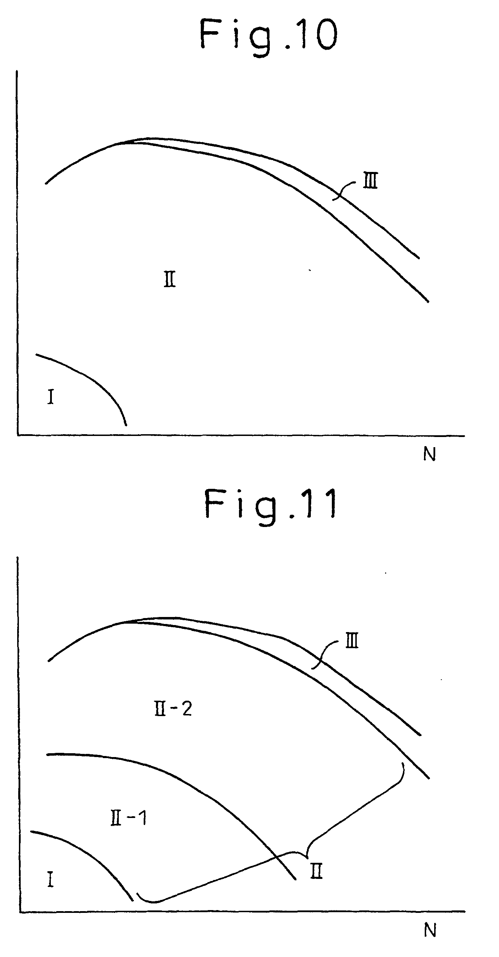

Therefore, in one embodiment according to the present invention, as shown in Fig. 10, ordinary combustion is performed in the operating region I with the small output torque L and the low engine speed N, that is, at the time of engine low load operation including idling operation, ordinary combustion is also performed in the operating region III close to full load with the relatively high engine speed, and multipoint ignition combustion by double injection according to the present invention is performed in the larger operating region II other than the operating regions I and III.

When ordinary combustion is performed in the operating region I, the temperature of the exhaust gas rises and therefore it is possible to maintain the oxidation catalyst 19 in an activated state at all times during the engine operation. Further, by performing the ordinary combustion in the operating region III, it is possible to burn all of the fuel in the optimal period and therefore possible to obtain a high engine output.

Figure 11 shows another embodiment. In this embodiment as well, ordinary combustion is performed in the engine low load operating region I including the idling operation. Ordinary combustion is also performed in the operating region III close to full load with a relatively high engine speed. As opposed to this, the operating region II, that is, the region other than the operating regions I and III, is divided into the low load side operating region II-1 and the high load side operating region II-2. In the high load side operating region II-2, the multipoint ignition combustion by double injection according to the present invention is performed. On the other hand, in the low load side operating region II-1, multipoint ignition combustion by single injection is performed.

Next, an explanation will be given of this multipoint ignition combustion by single injection.

As explained above, if injecting fuel in the fuel injection regions I and III of Figs. 4(A) and 4(B) and Figs. 5(A) and 5(B), the injected fuel is burned. In this case, the combustion differs completely between the combustion when fuel is injected in the injection timing region I and the combustion when fuel is injected in the injection timing region III.

That is, in the injection timing region III, the compression pressure in the combustion chamber 5 is low and therefore the injected fuel disperses through the entire combustion chamber 5. Next, when the compression stroke proceeds, the hydrocarbons contained in the injected fuel are oxidized. In this case, however, the space between fuel particles is large, so the fuel particles do not receive the heat of the oxidation reaction of the surrounding fuel particles and consequently the fuel particles are not thermally dissociated. Next, when the temperature of the fuel particles rises, the fuel particles are simultaneously burned at numerous locations. As a result, the combustion temperature in the combustion chamber 5 becomes low as a whole and therefore almost no NOx is produced any longer. Further, since the fuel particles are dispersed, there is sufficient air present around the fuel particles and consequently soot is not produced either.

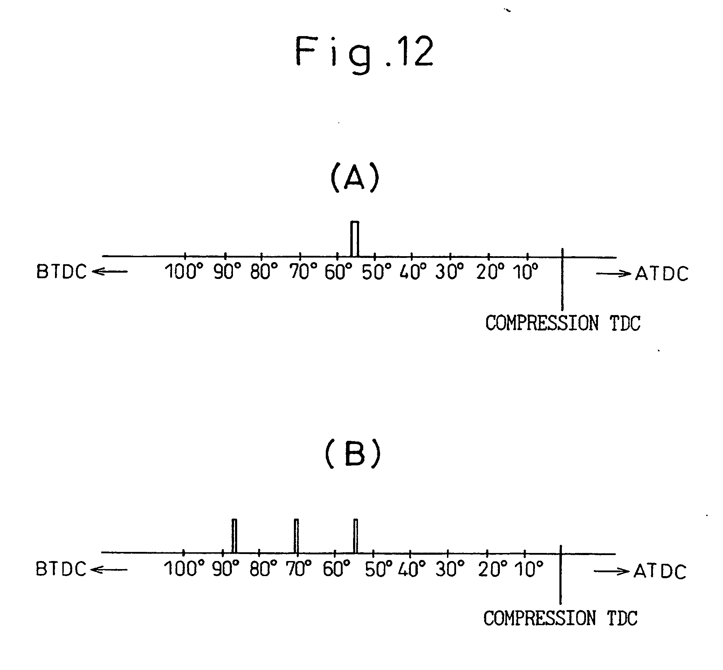

In this way, when injecting fuel in the injection timing region III, smooth combustion without almost no generation of NOx and soot is obtained. Therefore, in the embodiment shown in Fig. 11, fuel is injected only once as shown in Fig. 12(A) in the injection timing region III shown in Figs. 4(A) and 4(B) and Figs. 5(A) and 5(B) in the operating region II-1 and this injected fuel is used for multipoint ignition combustion. This multipoint ignition combustion by single injection gives less of an amount of NOx and soot than even multipoint ignition combustion by double injection.

Note that when injecting fuel in the injection timing region III, if the engine load becomes higher and the amount of fuel injection becomes greater, the density of the fuel particles becomes greater and as a result multipoint ignition combustion becomes more difficult. To make multipoint ignition combustion easier at this time, it is sufficient to reduce the density of the fuel. Therefore, it is sufficient to disperse the injected fuel throughout the combustion chamber 5. If the injected fuel is dispersed throughout the combustion chamber 5, however, the injected fuel deposits on the inside walls of the combustion chamber 5 and as a result a large amount of unburnt hydrocarbons is produced and the lubrication oil is diluted by the deposited fuel.

Therefore, when the amount of fuel injected becomes large, it becomes difficult to suppress the generation of unburnt hydrocarbons and cause multipoint ignition combustion. Therefore, in this embodiment, as explained above, in the low load side operating region II-1, multipoint ignition combustion by single injection is performed and, in the high load side operating region II-2, multipoint ignition combustion by double injection is performed.

As explained above, however, the multipoint ignition combustion by single injection produces less NOx and soot than even multipoint ignition combustion by double injection and therefore multipoint ignition combustion is preferably performed by single injection up to the high load side as much as possible. Therefore, in the embodiment shown in Fig. 12(B), in the injection timing regions III of Figs. 4(A) and 4(B) and Figs. 5(A) and 5(B), that is, during the compression stroke earlier than the injection timing region II, the fuel is made to be injected at intervals over several times.

If the fuel is injected at intervals over several times, the amount of injection per time becomes smaller. If the amount of injection per time becomes smaller, even if the injected fuel is dispersed throughout the combustion chamber 5, the density of the fuel particles becomes small and therefore even if the amount of injection per time is considerably increased, it becomes possible to cause multipoint ignition combustion. Therefore, by injecting the fuel at intervals over several times, it becomes possible to enlarge the operating region in which multipoint ignition combustion occurs to the high load side.

In the embodiment shown in Fig. 12(B), fuel is injected three times in the fuel injection region III. The number of injections however is not limited to three and may be two or four, five, or six. Further, the amounts of the fuel injected may be all made the same or the amounts of injection may be made different for each injection.

According to the present invention, as mentioned above, it is possible to achieve smooth combustion with little generation of NOx and soot.

While the invention has been described with reference to specific embodiments chosen for purposes of illustration, it should be apparent that numerous modifications could be made thereto by those skilled in the art.

A compression-ignition type engine wherein auxiliary fuel of not more than 30 percent of the maximum amount of fuel is injected at the injection timing region II extending about 20 degrees from about 50 degrees before top dead center of the compression stroke, the auxiliary fuel is maintained in the state oxidized up to the intermediate oxidation stage up after the top dead center of the compression stroke from that, and the main fuel is injected after the top dead center of the compression stroke, whereby the injected fuel is simultaneously ignited at numerous locations.

## Claims

1. A compression-ignition type engine provided with a fuel injector for injecting fuel toward a combustion chamber, auxiliary fuel being injected from the fuel injector during a compression stroke, and then main fuel being injected from the fuel injector, wherein
the auxiliary fuel is injected at a predetermined auxiliary fuel injection timing enabling the hydrocarbons contained in the auxiliary fuel to be maintained in the state oxidized up to the intermediate oxidation stage up to after the completion of injection of the main fuel, and
the main fuel is injected at a predetermined main fuel injection timing delayed from an injection timing of the main fuel at which the main fuel can be burned without poor combustion or misfires when auxiliary fuel is not injected, said predetermined main fuel injection timing being one where combustion is performed with poor combustion or misfires when auxiliary fuel is not injected and without poor combustion or misfires when auxiliary fuel is injected, whereby
the fuel is simultaneously ignited at numerous locations distributed over substantially the entire inside of the combustion chamber after more than a certain period passes after completion of injection of the main fuel.

2. A compression-ignition type engine as set forth in claim 1, wherein the amount of injection of auxiliary fuel is not more than 30 percent of the maximum amount of injection.

3. A compression-ignition type engine as set forth in claim 1, wherein the predetermined auxiliary fuel injection timing is made an injection timing where misfires occur when auxiliary fuel is not injected and where hydrocarbons contained in the auxiliary fuel can be maintained in the state oxidized up to the intermediate oxidation stage up to after the predetermined main fuel injection timing.

4. A compression-ignition type engine as set forth in claim 3, wherein the predetermined auxiliary fuel injection timing is between about 50° before top dead center of the compression stroke to about 20° before top dead center of the compression stroke.

5. A compression-ignition type engine as set forth in claim 4, wherein the predetermined auxiliary fuel injection timing is made more toward the bottom dead center side of the compression stroke the higher the engine speed.

6. A compression-ignition type engine as set forth in claim 4, wherein the predetermined auxiliary fuel injection timing is between a limit value of the advanced side and a limit value of the delayed side and the difference between the injection timing at the limit value of the advanced side and the injection timing at the limit value of the delayed side at the same engine speed is made smaller the larger the ratio of the amount of injection of the auxiliary fuel to the maximum amount of injection.

7. A compression-ignition type engine as set forth in claim 6, wherein the injection timing at the limit value at the advanced side is about 40° before top dead center of the compression stroke when the engine speed is 1000 rpm, is about 45° before top dead center of the compression stroke when the engine speed is 2000 rpm, and is about 50° before top dead center of the compression stroke when the engine speed is 3000 rpm.

8. A compression-ignition type engine as set forth in claim 6, wherein the injection timing at the limit value at the delayed side when the amount of injection of the auxiliary fuel is 20 percent of the maximum amount of injection is about 30° before top dead center of the compression stroke when the engine speed is 1000 rpm, is about 35° before top dead center of the compression stroke when the engine speed is 2000 rpm, and is about 40° before top dead center of the compression stroke when the engine speed is 3000 rpm.

9. A compression-ignition type engine as set forth in claim 6, wherein the injection timing at the limit value at the delayed side when the amount of injection of the auxiliary fuel is 10 percent of the maximum amount of injection is about 20° before top dead center of the compression stroke when the engine speed is 1000 rpm, is about 25° before top dead center of the compression stroke when the engine speed is 2000 rpm, and is about 30° before top dead center of the compression stroke when the engine speed is 3000 rpm.

10. A compression-ignition type engine as set forth in claim 4, wherein the fuel injector is comprised of a hole nozzle provided with a plurality of nozzle openings and the diameter of the nozzle openings is from about 0.04 mm to about 0.2 mm.

11. A compression-ignition type engine as set forth in claim 1, wherein the predetermined auxiliary fuel injection timing is made an injection timing where poor combustion occurs or combustion occurs and the engine is driven when main fuel is not injected and where the hydrocarbons contained in the auxiliary fuel can be maintained in the state oxidized up to the intermediate oxidation stage up to after the predetermined main fuel injection timing.

12. A compression-ignition type engine as set forth in claim 11, wherein the predetermined auxiliary fuel injection timing is made more toward the delayed side from the auxiliary fuel injection timing where misfires occur when main fuel is not injected and the hydrocarbons contained in the auxiliary fuel can be maintained in the state oxidized up to the intermediate oxidation stage up to after the predetermined main fuel injection timing.

13. A compression-ignition type engine as set forth in claim 1, wherein the fuel injector is comprised of a hole nozzle provided with a plurality of nozzle openings and the predetermined auxiliary fuel injection timing is made more toward the bottom dead center side of the compression stroke the larger the diameter of the nozzle openings.

14. A compression-ignition type engine as set forth in claim 1, wherein the injection timing of the main fuel is after the top dead center of the compression stroke.

15. A compression-ignition type engine as set forth in claim 14, wherein when the average particle size of the injected fuel is less than about 50 µm, the predetermined main fuel injection timing is after 8° after top dead center of the compression stroke.

16. A compression-ignition type engine as set forth in claim 15, wherein when the fuel injector is comprised of a hole nozzle provided with a plurality of nozzle openings and the diameter of the nozzle openings is from about 0.04 mm to about 0.2 mm, the predetermined main fuel injection timing is after 8° after top dead center of the compression stroke.

17. A compression-ignition type engine as set forth in claim 1, wherein the larger the average particle size of the injected fuel, the more advanced the predetermined main fuel injection timing.

18. A compression-ignition type engine as set forth in claim 17, wherein the fuel injector is comprised of a hole nozzle provided with a plurality of nozzle openings and the predetermined main fuel injection timing is advanced the larger the diameter of the nozzle openings.

19. A compression-ignition type engine as set forth in claim 1, wherein the fuel injector is comprised of a hole nozzle provided with a plurality of nozzle openings and the fuel is not ignited at the periphery of the spray of the main fuel injected from the nozzle openings, but is simultaneously ignited at numerous locations after the fuel in the spray injected from the nozzle openings after the completion of injection of the main fuel is uniformly dispersed in the combustion chamber.

20. A compression-ignition type engine as set forth in claim 1, wherein the higher the engine speed, the earlier the main fuel injection timing.

21. A compression-ignition type engine as set forth in claim 1, wherein the auxiliary fuel is injected at the predetermined auxiliary fuel injection timing and the main fuel is injected at the predetermined main fuel injection timing in a predetermined operating region excluding a low load operating region including idling operation and an operating region close to full load, and the fuel is injected between the predetermined auxiliary fuel injection timing and predetermined main fuel injection timing in the low load operating region including idling operation and the operating region close to full load.

22. A compression-ignition type engine as set forth in claim 1, wherein the engine operating region is divided into at least two operating regions of a high load side operating region and a low load side operating region, the auxiliary fuel is injected at the predetermined auxiliary fuel injection timing and the main fuel is injected at the predetermined main fuel injection timing in the high load side operating region, and fuel is injected during the compression stroke before the predetermined auxiliary fuel injection timing in the low load side operating region.

23. A compression-ignition type engine as set forth in claim 22, wherein, at the low load side operating region, the fuel is injected over several times during the compression stroke before the predetermined auxiliary fuel injection timing.

24. A compression-ignition type engine as set forth in claim 1, wherein the auxiliary fuel is injected at the predetermined auxiliary fuel injection timing and the main fuel is injected at the main fuel injection timing at a high load side of a predetermined operating region excluding a low load operating region including idling operation and an operating region close to full load, fuel is injected during the compression stroke before the predetermined auxiliary fuel injection timing at the low load side of the predetermined operating region, and fuel is injected between the predetermined auxiliary fuel injection timing and the predetermined main fuel injection timing in the low load operating region including idling operation and the operating region close to full load.

25. A compression-ignition type engine as set forth in claim 24, wherein at the low load side of the predetermined operating region, the fuel is injected over several times during the compression stroke before the predetermined auxiliary fuel injection timing.

## Patentansprüche

1. Kompressionszündungsverbrennungsmotor, der mit einem Kraftstoffinjektor zum Einspritzen von Kraftstoff in Richtung auf eine Brennkammer versehen ist, wobei Hilfskraftstoff von dem Kraftstoffinjektor während eines Kompressionstakts eingespritzt wird, und dann Hauptkraftstoff von dem Kraftstoffinjektor eingespritzt wird wobei
der Hilfskraftstoff bei einer vorbestimmten Hilfskraftstoffeinspritzzeitabstimmung eingespritzt wird, die ermöglicht, dass die Kohlenwasserstoffe, die in dem Hilfskraftstoff enthalten sind, in dem bis zu der mittleren Oxidationsstufe oxidierten Zustand bis nach der Beendigung der Einspritzung des Hauptkraftstoffs beibehalten werden, und
wobei der Hauptkraftstoff bei einer vorbestimmten Hauptkraftstoffeinspritzzeitabstimmung eingespritzt wird, die von einer Einspritzzeitabstimmung des Hauptkraftstoffs verzögert ist, bei der der Hauptkraftstoff ohne eine schwache Verbrennung oder Fehlzündungen verbrannt werden kann, wenn Hilfskraftstoff nicht eingespritzt wird, wobei die vorbestimmte Hauptkraftstoffeinspritzzeitabstimmung eine solche ist, bei der eine Verbrennung mit einer schwachen Verbrennung oder mit Fehlzündungen durchgeführt wird, wenn Hilfskraftstoff nicht eingespritzt wird, und ohne eine schwache Verbrennung oder Fehlzündungen ist, wenn Hilfskraftstoff eingespritzt wird, wodurch
der Kraftstoff gleichzeitig an vielzähligen Orten, die über im Wesentlichen das gesamte Innere der Brennkammer verteilt sind, gezündet wird, nachdem mehr als eine gewisse Dauer nach der Beendigung der Einspritzung des Hauptkraftstoffs verläuft.

2. Kompressionszündungsverbrennungsmotor gemäß Anspruch 1, wobei die Menge der Einspritzung des Hilfskraftstoffs nicht mehr als 30 % der maximalen Menge der Einspritzung beträgt.

3. Kompressionszündungsverbrennungsmotor gemäß Anspruch 1, wobei die vorbestimmte Hilfskraftstoffeinspritzzeitabstimmung bei einer Einspritzzeitabstimmung vorgenommen wird, bei der Fehlzündungen auftreten, wenn Hilfskraftstoff nicht eingespritzt wird, und bei der Kohlenwasserstoffe, die in dem Hilfskraftstoff enthalten sind, in dem bis zu der mittleren Oxidationsstufe oxidierten Zustand bis nach der vorbestimmten Hauptkraftstoffeinspritzzeitabstimmung beibehalten werden können.

4. Kompressionszündungsverbrennungsmotor gemäß Anspruch 3, wobei die vorbestimmte Hilfskraftstoffeinspritzzeitabstimmung zwischen ungefähr 50° vor dem oberen Totpunkt des Kompressionstakts bis ungefähr 20° vor dem oberen Totpunkt des Kompressionstakts liegt.

5. Kompressionszündungsverbrennungsmotor gemäß Anspruch 4, wobei die vorbestimmte Hilfskraftstoffeinspritzzeitabstimmung weiter in Richtung auf die Seite des unteren Totpunkts des Kompressionstakts gelegt wird, je höher die Verbrennungsmotordrehzahl ist.

6. Kompressionszündungsverbrennungsmotor gemäß Anspruch 4, wobei die vorbestimmte Hilfskraftstoffeinspritzzeitabstimmung zwischen einem Grenzwert einer vorgestellten Seite und einem Grenzwert der verzögerten Seite liegt und die Differenz zwischen der Einspritzzeitabstimmung bei dem Grenzwert der vorgestellten Seite und der Einspritzzeitabstimmung bei dem Grenzwert der verzögerten Seite bei der gleichen Verbrennungsmotordrehzahl kleiner gemacht wird, umso größer das Verhältnis der Menge der Einspritzung des Hilfskraftstoffs zu der maximalen Menge der Einspritzung ist.

7. Kompressionszündungsverbrennungsmotor gemäß Anspruch 6, wobei die Einspritzzeitabstimmung an dem Grenzwert an der vorgestellten Seite ungefähr 40° vor dem oberen Totpunkt des Kompressionstakts liegt, wenn die Verbrennungsmotordrehzahl 1000 U/min beträgt, ungefähr 45° vor dem oberen Totpunkt des Kompressionstakts liegt, wenn die Verbrennungsmotordrehzahl 2000 U/min beträgt, und ungefähr 50° vor dem oberen Totpunkt des Kompressionstakts liegt, wenn die Verbrennungsmotordrehzahl 3000 U/min beträgt.

8. Kompressionszündungsverbrennungsmotor gemäß Anspruch 6, wobei die Einspritzzeitabstimmung an dem Grenzwert an der verzögerten Seite, wenn die Menge der Einspritzung des Hilfskraftstoffs 20 % der maximalen Menge der Einspritzung beträgt, ungefähr 30° vor dem oberen Totpunkt des Kompressionstakts liegt, wenn die Verbrennungsmotordrehzahl 1000 U/min beträgt, ungefähr 35° vor dem oberen Totpunkt des Kompressionstakts liegt, wenn die Verbrennungsmotordrehzahl 2000 U/min beträgt, und ungefähr 40° vor dem oberen Totpunkt des Kompressionstakts liegt, wenn die Verbrennungsmotordrehzahl 3000 U/min beträgt.

9. Kompressionszündungsverbrennungsmotor gemäß Anspruch 6, wobei die Einspritzzeitabstimmung an dem Grenzwert an der verzögerten Seite, wenn die Menge der Einspritzung des Hilfskraftstoffs 10 % der maximalen Menge der Einspritzung beträgt, ungefähr 20° vor dem oberen Totpunkt des Kompressionstakts liegt, wenn die Verbrennungsmotordrehzahl 1000 U/min beträgt, ungefähr 25° vor dem oberen Totpunkt des Kompressionstakts liegt, wenn die Verbrennungsmotordrehzahl 2000 U/min beträgt, und ungefähr 30° vor dem oberen Totpunkt des Kompressionstakts liegt, wenn die Verbrennungsmotordrehzahl 3000 U/min beträgt.

10. Kompressionszündungsverbrennungsmotor gemäß Anspruch 4, wobei der Kraftstoffinjektor eine Lochdüse aufweist, die mit einer Vielzahl von Düsenöffnungen versehen ist, und wobei der Durchmesser der Düsenöffnungen von ungefähr 0,04 mm bis ungefähr 0,2 mm beträgt.

11. Kompressionszündungsverbrennungsmotor gemäß Anspruch 1, wobei die vorbestimmte Hilfskraftstoffeinspritzzeitabstimmung an eine Einspritzzeitabstimmung gelegt wird, bei der eine schwache Verbrennung auftritt oder eine Verbrennung auftritt und der Motor betrieben wird, wenn Hauptkraftstoff nicht eingespritzt wird, und wenn Kohlenwasserstoffe, die in dem Hilfskraftstoff enthalten sind, in dem bis zu der mittleren Oxidationsstufe oxidierten Zustand bis nach der vorbestimmten Hauptkraftstoffeinspritzzeitabstimmung beibehalten werden können.

12. Kompressionszündungsverbrennungsmotor gemäß Anspruch 11, wobei die vorbestimmte Hilfskraftstoffeinspritzzeitabstimmung weiter in Richtung auf die verzögerte Seite von der Hilfskraftstoffeinspritzzeitabstimmung gelegt wird, bei der Fehlzündungen auftreten, wenn Hauptkraftstoff nicht eingespritzt wird, und wenn die Kohlenwasserstoffe, die in dem Hilfskraftstoff enthalten sind, in dem bis zu der mittleren Oxidationsstufe oxidierten Zustand bis nach der vorbestimmten Hauptkraftstoffeinspritzung beibehalten werden können.

13. Kompressionszündungsverbrennungsmotor gemäß Anspruch 1, wobei der Kraftstoffinjektor eine Lochdüse aufweist, die mit einer Vielzahl von Düsenöffnungen versehen ist, und wobei die vorbestimmte Hilfskraftstoffeinspritzzeitabstimmung weiter in Richtung auf die Seite des unteren Totpunkts des Kompressionstakts gelegt wird, je größer der Durchmesser der Düsenöffnungen ist.

14. Kompressionszündungsverbrennungsmotor gemäß Anspruch 1, wobei die Einspritzzeitabstimmung des Hauptkraftstoffs nach dem oberen Totpunkt des Kompressionstakts liegt.

15. Kompressionszündungsverbrennungsmotor gemäß Anspruch 14, wobei dann, wenn die durchschnittliche Partikelgröße des eingespritzten Kraftstoffs geringer als ungefähr 50 µm ist, die vorbestimmte Hauptkraftstoffeinspitzzeitabstimmung nach 8° nach dem oberen Totpunkt des Kompressionstakts liegt.

16. Kompressionszündungsverbrennungsmotor gemäß Anspruch 15, wobei dann, wenn der Kraftstoffinjektor eine Lochdüse aufweist, die mit einer Vielzahl von Düsenöffnungen versehen ist, und wobei der Durchmesser der Düsenöffnungen von ungefähr 0,04 mm bis ungefähr 0,2 mm beträgt, und die vorbestimmte Hauptkraftstoffeinspitzzeitabstimmung nach 8° nach dem oberen Totpunkt des Kompressionstakts liegt.

17. Kompressionszündungsverbrennungsmotor gemäß Anspruch 1, wobei die vorbestimmte Hauptkraftstoffeinspitzzeitabstimmung umso weiter vorgestellt wird, umso größer die durchschnittliche Partikelgröße des eingespritzten Kraftstoffs ist.

18. Kompressionszündungsverbrennungsmotor gemäß Anspruch 17, wobei der Kraftstoffinjektor eine Lochdüse aufweist, die mit einer Vielzahl von Düsenöffnungen versehen ist und wobei die vorbestimmte Hauptkraftstoffeinspitzzeitabstimmung vorgestellt wird, umso größer der Durchmesser der Düsenöffnungen ist.

19. Kompressionszündungsverbrennungsmotor gemäß Anspruch 1, wobei der Kraftstoffinjektor eine Lochdüse aufweist, die mit einer Vielzahl von Düsenöffnungen versehen ist und wobei der Kraftstoff nicht an dem Rand des Sprühnebels des Hauptkraftstoffs gezündet wird, der von den Düsenöffnungen eingespritzt wird, aber gleichzeitig an vielzähligen Orten gezündet wird, nachdem der Kraftstoff in dem Sprühnebel, der von den Düsenöffnungen nach der Beendigung der Einspritzung des Hauptkraftstoffs eingespritzt wird, einheitlich in der Brennkammer dispergiert ist.

20. Kompressionszündungsverbrennungsmotor gemäß Anspruch 1, wobei die Hauptkraftstoffeinspitzzeitabstimmung umso früher liegt, umso höher die Verbrennungsmotordrehzahl ist.

21. Kompressionszündungsverbrennungsmotor gemäß Anspruch 1, wobei der Hilfskraftstoff an der vorbestimmten Hilfskraftstoffeinspritzzeitabstimmung eingespritzt wird und der Hauptkraftstoff an der vorbestimmten Hauptkraftstoffeinspitzzeitabstimmung in einem vorbestimmten Betriebsbereich ausschließlich eines Niedriglastbetriebsbereichs einschließlich eines Leerlaufbetriebs und eines Betriebsbereichs in der Nähe der Volllast eingespritzt wird, und wobei der Kraftstoff zwischen der vorbestimmten Hilfskraftstoffeinspritzzeitabstimmung und der vorbestimmten Hauptkraftstoffeinspitzzeitabstimmung in dem Niedriglastbetriebsbereich einschließlich dem Leerlaufbetrieb und dem Betriebsbereich in der Nähe der Volllast eingespritzt wird.

22. Kompressionszündungsverbrennungsmotor gemäß Anspruch 1, wobei der Verbrennungsmotorbetriebsbereich in zumindest zwei Betriebsbereiche eines Hochlastbetriebsbereichs und eines Niedriglastbetriebsbereichs geteilt ist, wobei der Hilfskraftstoff an der vorbestimmten Hilfskraftstoffeinspritzzeitabstimmung eingespritzt wird und der Hauptkraftstoff an der vorbestimmten Hauptkraftstoffeinspitzzeitabstimmung in dem Hochlastbetriebsbereich eingespritzt wird, und wobei der Kraftstoff während des Kompressionstakts vor der vorbestimmten Hilfskraftstoffeinspritzzeitabstimmung in dem Niedriglastbetriebsbereich eingespritzt wird.

23. Kompressionszündungsverbrennungsmotor gemäß Anspruch 22, wobei bei dem Niedriglastbetriebsbereich der Kraftstoff über mehrere Male während des Kompressionstakts vor der vorbestimmten Hilfskraftstoffeinspritzzeitabstimmung eingespritzt wird.

24. Kompressionszündungsverbrennungsmotor gemäß Anspruch 1, wobei der Hilfskraftstoff an der vorbestimmten Hilfskraftstoffeinspritzzeitabstimmung eingespritzt wird und der Hauptkraftstoff an der Hauptkraftstoffeinspitzzeitabstimmung an einer Seite einer hohen Last eines vorbestimmten Betriebsbereichs ausschließlich eines Niedriglastbetriebsbereichs einschließlich eines Leerlaufbetriebs und eines Betriebsbereichs in der Nähe der Volllast eingespritzt wird, wobei Kraftstoff während des Kompressionstakts vor der vorbestimmten Hilfskraftstoffeinspritzzeitabstimmung an der Seite der niedrigen Last des vorbestimmten Betriebsbereichs eingespritzt wird und wobei Kraftstoff zwischen der vorbestimmten Hilfskraftstoffeinspritzzeitabstimmung und der vorbestimmten Hauptkraftstoffeinspitzzeitabstimmung in dem Niedriglastbetriebsbereich einschließlich dem Leerlaufbetrieb und dem Betriebsbereich in der Nähe der Volllast eingespritzt wird.

25. Kompressionszündungsverbrennungsmotor gemäß Anspruch 24, wobei an der Seite der niedrigen Last des vorbestimmten Betriebsbereichs der Kraftstoff über mehrere Male während des Kompressionstakts vor der vorbestimmten Hilfskraftstoffeinspritzzeitabstimmung eingespritzt wird.

## Revendications

1. Moteur du type à allumage par compression muni d'un injecteur de carburant destiné à injecter le carburant vers une chambre de combustion, le carburant auxiliaire étant injecté depuis l'injecteur de carburant pendant une course de compression, puis le carburant principal étant injecté depuis l'injecteur de carburant, dans lequel
le carburant auxiliaire est injecté à un calage d'injection de carburant auxiliaire prédéterminé permettant que les hydrocarbures contenus dans le carburant auxiliaire soient maintenus dans l'état oxydé jusqu'à l'étape d'oxydation intermédiaire après l'achèvement de l'injection du carburant principal, et
le carburant principal est injecté à un calage d'injection de carburant principal prédéterminé retardé par rapport à un calage d'injection du carburant principal auquel le carburant principal peut être brûlé sans combustion pauvre ou ratés d'allumage lorsque le carburant auxiliaire n'est pas injecté, ledit calage d'injection de carburant principal prédéterminé étant un calage dans lequel la combustion est réalisée avec une combustion pauvre ou des ratés d'allumage lorsque le carburant auxiliaire n'est pas injecté et sans combustion pauvre ou ratés d'allumage lorsque le carburant auxiliaire est injecté, d'où il résulte que
le carburant est simultanément allumé en de nombreux emplacements répartis sur pratiquement la totalité de l'intérieur de la chambre de combustion après que plus d'une certaine période se soit écoulée après l'achèvement de l'injection du carburant principal.

2. Moteur du type à allumage par compression selon la revendication 1, dans lequel la quantité d'injection de carburant auxiliaire n'est pas supérieure à 30 % de la quantité maximale d'injection.

3. Moteur du type à allumage par compression selon la revendication 1, dans lequel le calage d'injection de carburant auxiliaire prédéterminé est amené au calage d'injection auquel des ratés d'allumage se produisent lorsque le carburant auxiliaire n'est pas injecté et lorsque les hydrocarbures contenus dans le carburant auxiliaire peuvent être maintenus dans l'état oxydé jusqu'à l'étape d'oxydation intermédiaire jusqu'à après le calage d'injection de carburant principal prédéterminé.

4. Moteur du type à allumage par compression selon la revendication 3, dans lequel le calage d'injection de carburant auxiliaire prédéterminé se situe entre environ 50° avant le point mort haut de la course de compression et environ 20° avant le point mort haut de la course de compression.

5. Moteur du type à allumage par compression selon la revendication 4, dans lequel le calage d'injection de carburant auxiliaire prédéterminé est amené davantage vers le point mort bas de la course de compression à mesure que la vitesse du moteur augmente.

6. Moteur du type à allumage par compression selon la revendication 4, dans lequel le calage d'injection de carburant auxiliaire prédéterminé se situe entre une valeur limite du côté avancé et une valeur limite du côté retardé, et la différence entre le calage d'injection au niveau de la valeur limite du côté avancé et le calage d'injection au niveau de la valeur limite du côté retardé à la même vitesse de moteur, est rendue inférieure à mesure que le rapport de la quantité d'injection de carburant auxiliaire par rapport à la quantité d'injection maximale devient important.

7. Moteur du type à allumage par compression selon la revendication 6, dans lequel le calage d'injection au niveau de la valeur limite du côté avancé se situe à environ 40° avant le point mort haut de la course de compression lorsque la vitesse du moteur est de 1000 tr/min, se situe à environ 45° avant le point mort haut de la course de compression lorsque la vitesse du moteur est de 2000 tr/min, et se situe à environ 50° avant le point mort haut de la course de compression lorsque la vitesse du moteur et de 3000 tr/min.

8. Moteur du type à allumage par compression selon la revendication 6, dans lequel le calage d'injection au niveau de la valeur limite du côté retardé lorsque la quantité d'injection de carburant auxiliaire est de 20 % de la quantité maximale d'injection se situe à environ 30° avant le point mort haut de la course de compression lorsque la vitesse du moteur est de 1000 tr/min, se situe à environ 35° avant le point mort haut de la course de compression lorsque la vitesse du moteur est de 2000 tr/min, et se situe à environ 40° avant le point mort haut de la course de compression lorsque la vitesse du moteur est de 3000 tr/min.

9. Moteur du type à allumage par compression selon la revendication 6, dans lequel le calage d'injection au niveau de la valeur limite du côté retardé lorsque la quantité d'injection du carburant auxiliaire est 10 % de la quantité maximale d'injection se situe à environ 20° avant le point mort haut de la course de compression lorsque la vitesse du moteur est de 1000 tr/min, se situe à environ 25° avant le point mort haut de la course de compression lorsque la vitesse du moteur est de 2000 tr/min, et se situe à environ 30° avant le point mort haut de la compression lorsque la vitesse du moteur est de 3000 tr/min.

10. Moteur du type à allumage par compression selon la revendication 4, dans lequel l'injecteur de carburant est composé d'une buse à trous munie d'une pluralité d'ouvertures de buse et le diamètre des ouvertures de buse se situe entre environ 0,04 mm et environ 0,2 mm.

11. Moteur du type à allumage par compression selon la revendication 1, dans lequel le calage d'injection de carburant auxiliaire prédéterminé est amené à un calage d'injection auquel la combustion pauvre se produit ou la combustion se produit et le moteur est entraîné lorsque le carburant principal n'est pas injecté et lorsque les hydrocarbures contenus dans le carburant auxiliaire peuvent être maintenus dans l'état oxydé jusqu'à l'étape d'oxydation intermédiaire jusqu'à après le calage d'injection de carburant principal prédéterminé.

12. Moteur du type à allumage par compression selon la revendication 11, dans lequel le calage d'injection de carburant auxiliaire prédéterminé est amené davantage vers le côté retardé par rapport au calage d'injection de carburant auxiliaire lorsque des ratés allumage se produisent lorsque le carburant principal n'est pas injecté et lorsque les hydrocarbures contenus dans le carburant auxiliaire peuvent être maintenus dans l'état oxydé jusqu'à l'étape d'oxydation intermédiaire jusqu'à après le calage d'injection de carburant principal prédéterminé.

13. Moteur du type à allumage par compression selon la revendication 1, dans lequel l'injecteur de carburant est composé d'une buse à trous munie d'une pluralité d'ouvertures de buse et le calage d'injection de carburant auxiliaire prédéterminé est amené davantage vers le côté du point mort bas de la course de compression à mesure que le diamètre des ouvertures de buse devient important.

14. Moteur du type à allumage par compression selon la revendication 1, dans lequel le calage d'injection du carburant principal se situe après le point mort haut de la course de compression.

15. Moteur du type à allumage par compression selon la revendication 14, dans lequel lorsque la dimension particulaire moyenne du carburant injecté est inférieure à environ 50 µm, le calage d'injection de carburant principal prédéterminé se situe après 8° après le point mort de la course de compression.

16. Moteur du type à allumage par compression selon la revendication 15, dans lequel lorsque l'injecteur de carburant est composé d'une buse munie d'une pluralité d'ouvertures de buse et que le diamètre des ouvertures de buse se situe entre environ 0,04 mm et environ 0,2 mm, le calage d'injection de carburant principal prédéterminé se situe après 8° après le point mort haut de la course de compression.

17. Moteur du type à allumage par compression selon la revendication 1, dans lequel plus la dimension particulaire moyenne du carburant injecté est importante, plus le calage d'injection de carburant principal prédéterminé est avancé.

18. Moteur du type à allumage par compression selon la revendication 17, dans lequel l'injecteur de carburant est composé d'une buse à trous munie d'une pluralité d'ouvertures de buse et le calage d'injection de carburant principal prédéterminé est avancé à mesure que le diamètre des ouvertures de buse devient important.

19. Moteur du type à allumage par compression selon la revendication 1, dans lequel l'injecteur de carburant est composé d'une buse à trous munie d'une pluralité d'ouvertures de buse et le carburant n'est pas allumé au niveau de la périphérie de la vaporisation du carburant principal injecté depuis les ouvertures de buse, mais est simultanément allumé en de nombreux emplacements après que le carburant vaporisé injecté depuis les ouvertures de buse après l'achèvement de l'injection du carburant principal se soit uniformément dispersé dans la chambre de combustion.

20. Moteur du type à allumage par compression selon la revendication 1, dans lequel plus la vitesse du moteur est élevée, plus le calage d'injection de carburant principal est avancé.

21. Moteur du type à allumage par compression selon la revendication 1, dans lequel le carburant auxiliaire est injecté au calage d'injection de carburant auxiliaire prédéterminé et le carburant principal est injecté au calage d'injection de carburant principal prédéterminé dans une région de fonctionnement prédéterminée excluant une région de fonctionnement à faible charge comprenant le fonctionnement au ralenti et une région de fonctionnement proche de la pleine charge, et le carburant est injecté entre le calage d'injection de carburant auxiliaire prédéterminé et le calage d'injection de carburant principal prédéterminé dans la région de fonctionnement à faible charge incluant le fonctionnement au ralenti et la région de fonctionnement proche de la pleine charge.

22. Moteur du type à allumage par compression selon la revendication 1, dans lequel la région de fonctionnement du moteur est divisée en au moins deux régions de fonctionnement d'une région de fonctionnement côté charge élevée et une région de fonctionnement côté faible charge, le carburant auxiliaire est injecté au calage d'injection de carburant auxiliaire prédéterminé et le carburant principal est injecté au calage d'injection de carburant principal prédéterminé dans la région de fonctionnement côté charge élevée, et le carburant est injecté pendant la course de compression avant le calage d'injection de carburant auxiliaire prédéterminé dans la région de fonctionnement côté faible charge.

23. Moteur du type à allumage par compression selon la revendication 22, dans lequel, au niveau de la région de fonctionnement côté faible charge, le carburant est injecté plusieurs fois pendant la course de compression avant le calage d'injection de carburant auxiliaire prédéterminé.

24. Moteur du type à allumage par compression selon la revendication 1, dans lequel le carburant auxiliaire est injecté au calage d'injection de carburant auxiliaire prédéterminé et le carburant principal est injecté au calage d'injection de carburant principal du côté charge élevée d'une région de fonctionnement prédéterminée excluant une région de fonctionnement à faible charge incluant le fonctionnement au ralenti et une région de fonctionnement proche de la pleine charge, le carburant est injecté pendant la course de compression avant le calage d'injection de carburant auxiliaire prédéterminé du côté faible charge de la région de fonctionnement prédéterminée, et le carburant est injecté entre le calage d'injection de carburant auxiliaire prédéterminé et le calage d'injection de carburant principal prédéterminé dans la région de fonctionnement à faible charge incluant le fonctionnement au ralenti et la région de fonctionnement proche de la pleine charge.

25. Moteur du type à allumage par compression selon la revendication 24, dans lequel au niveau du côté faible charge de la région de fonctionnement prédéterminée, le carburant est injecté plusieurs fois pendant la course de compression avant le calage d'injection de carburant auxiliaire prédéterminé.
